# EUROPÄISCHE PATENTSCHRIFT

(11) **EP 3 077 700 B1**
(45) Veröffentlichungstag und Bekanntmachung des Hinweises auf die Patenterteilung: **17.06.2020**
(21) Anmeldenummer: 14806677.2
(22) Anmeldetag: 05.12.2014
(51) Int. Cl.: F16F 9/05

(54) **ABROLLKOLBEN**
ROLLING PISTON
PISTON À DÉROULEMENT

(30) Priorität: 05.12.2013 DE 102013113577
(43) Veröffentlichungstag der Anmeldung: 12.10.2016
(73) Patentinhaber: Vibracoustic CV Air Springs GmbH, 20099 Hamburg (DE); SAF-HOLLAND GmbH, 63856 Bessenbach (DE)
(72) Erfinder: WEBER, Michael, 21244 Buchholz (DE); FÄTH, Stefan, 63743 Aschaffenburg (DE)
(74) Vertreter: Müller Schupfner & Partner Patent- und Rechtsanwaltspartnerschaft mbB
(86) Internationale Anmeldenummer: PCT/EP2014/076754
(87) Internationale Veröffentlichungsnummer: WO 2015/082699

(56) Entgegenhaltungen:
- WO-A1-2012/087917
- WO-A1-2012/100003
- DE-A1-102012 103 358
- DE-A1-102012 220 317
- US-A1- 2012 061 887

## Beschreibung

Die vorliegende Erfindung betrifft einen Abrollkolben für einen Luftfederdämpfer im Nutzfahrzeugbereich. Ferner betrifft die Erfindung einen Luftfederdämpfer mit einem derartigen Abrollkolben.

Luftfedern oder auch Rollbalgfedern dienen zur Abfederung zweier zueinander beweglicher Fahrzeugteile, aber auch zur Veränderung der Niveaulage eines Fahrzeugs. Derartige Luftfedern weisen einen Luftfederbalg aus Gummi auf, der mit einem oberen Abschlusselement, zumeist in Form einer Platte, und einem Abrollkolben verbunden ist, um einen luftdicht abgeschlossenen Arbeitsraum zu bilden. Bei einer Ein- und Ausfederung rollt der Rollbalg an der Außenfläche des Abrollkolbens ab. Ferner erfolgt über den Abrollkolben die Anbindung der Luftfeder an einem Fahrzeugteil, wie beispielsweise einem Tragarm oder einem Lenker.

Neben der zuvor beschriebenen Federungsfunktion ist es auch möglich, eine Luftfeder derart zu gestalten, dass diese zusätzlich eine Dämpfungsfunktion aufweist. Derartige Luftfedern werden als Luftfederdämpfer (LFD) bezeichnet. Bei einem Luftfederdämpfer erfolgt die Dämpfung dadurch, dass ein Fluid über einen verengten Querschnitt zwischen dem Arbeitsraum und einer in dem Abrollkolben ausgebildeten Kammer hin- und herströmt. Aufgrund des verengten Querschnitts und der damit verbundenen Reibung werden die eingeleiteten Schwingungen bedämpft. Zusätzlich kann der Querschnitt mittels eines Ventil freigebbar und verschließbar sein. Dadurch kann die Dämpfungsfunktion ein- und ausgeschaltet oder die Dämpfungscharakteristik verändert werden.

Das Dämpfungsverhalten eines derartigen Luftfederdämpfers ist von dem zur Verfügung stehenden Luftvolumen abhängig. Zur Erhöhung des Volumens ist es bekannt, den Arbeitsraum mit einem Zusatzvolumen in Form eines separaten Behälters zu verbinden.

So geht aus DE 10 2004 011 466 A1 ein Luftfederdämpfer hervor, dessen Abrollkolben über einen Verbindungskanal mit einem Zusatzvolumenbehälter verbunden ist. Im Verbindungskanal ist zudem ein Ventilsystem eingebracht, um die Dämpfungscharakteristik an unterschiedliche Fahrsituationen anzupassen.

Ein derartiger Luftfederdämpfer hat jedoch den Nachteil, dass infolge des separaten Zusatzvolumenbehälters ein großer Bauraum erforderlich ist. Für eine kompakte Bauweise ist es jedoch wünschenswert, das Zusatzvolumen in den Abrollkolben zu integrieren. Aufgrund des geringen zur Verfügung stehenden Bauraums ist es nicht möglich, einen rotationssymmetrischen Abrollkolben zu gestalten, der ein ausreichendes Volumen aufweist. Darüber hinaus ist es bekannt, das Volumen der angrenzenden Fahrzeugteile, wie beispielsweise eines Tragarms oder Lenkers als Zusatzvolumen zu nutzen. Derartige Lösungen sind jedoch sehr kostenintensiv, da sie komplexe Tiefziehteile benötigen, die gasdicht geschweißt werden müssen.

Die DE 10 2012 220 317 A1 betrifft eine Luftfeder für Fahrzeuge mit einem Luftfederbalg, der einen Arbeitsraum begrenzt, sowie einem Elastomerelement, welches als Anti-Rauigkeitslager ausgebildet ist, und offenbart einen Abrollkolben gemäß des Oberbegriffs des Anspruchs 1.

Die DE 10 2012 103 358 A1 betrifft einen Abrollkolben für einen Luftfederbalg, welcher aus zwei miteinander verbundenen Kolbenteilen besteht.

Die WO 2012/087917 A1 und die WO 2012/100003 A1 betreffen Luftfedern bestehend aus einem Rollbalg und einem Abrollkolben, auf welchem der Rollbalg bei einer Ein- und Ausfederbewegung abrollen kann.

Die US-2012/0061887 A1 betrifft eine Luftfeder mit einem Rollbalg, welcher auf einem Abrollkolben zur Anlage bringbar ist, wobei in dem Abrollkolben ein Zylinderelement angeordnet ist, welches mit dem Inneren des Abrollkolbens in Fluidverbindung steht.

Der Erfindung liegt daher die **Aufgabe** zugrunde, einen Abrollkolben für einen Luftfederdämpfer zu schaffen, der ein großes Volumen und eine kompakte Bauweise aufweist und gleichzeitig kostengünstig in der Herstellung ist.

Zur **Lösung** der Aufgabe wird ein Abrollkolben mit den Merkmalen des Anspruchs 1 vorgeschlagen.

Bevorzugte Ausgestaltungen des erfindungsgemäßen Abrollkolbens sind Gegenstand der abhängigen Ansprüche.

Der erfindungsgemäßen Abrollkolben umfasst einen Kolbenabschnitt und einen Behälterabschnitt, die hohl ausgebildet und fluidleitend miteinander verbunden sind, sowie ein Deckelelement. Das Deckelelement ist mit dem Behälterabschnitt verbunden, um einen Zusatzvolumenbehälter zu bilden. Der erfindungsgemäße Abrollkolben weist aufgrund des integrierten Zusatzvolumenbehälters eine kompakte Bauweise auf. Zudem ist der Zusatzvolumenbehälter derart ausgebildet, dass ein ausreichend großes Volumen für die Funktion eines Luftfederdämpfers zur Verfügung gestellt wird. Durch die Integration des Zusatzvolumenbehälters in dem Abrollkolben ist dieser kostengünstig in der Herstellung und weist zudem ein geringes Gewicht auf. Vorteilhaft ist der Zusatzvolumenbehälter derart in dem Abrollkolben integriert, dass dieser seitlich benachbart zu dem Abrollkolben angeordnet ist. Infolge der seitlichen Anordnung des Zusatzvolumenbehälters weist der erfindungsgemäße Abrollkolben eine geringe Gesamthöhe auf. Weiterhin bevorzugt erstreckt sich der Zusatzvolumenbehälter in Axialrichtung parallel zu dem Kolbenabschnitt.

Vorteilhaft ist der Abrollkolben mit dem Kolbenabschnitt und dem Behälterabschnitt einstückig beziehungsweise einteilig ausgeführt. Erfindungsgemäß werden die beiden Abschnitte auch getrennt voneinander hergestellt und anschließend gasdicht miteinander verbunden.

In einer vorteilhaften Ausgestaltung ist das Deckelelement halbkugelförmig ausgebildet. Dadurch weist der Zusatzvolumenbehälter eine verhältnismäßig kleine Oberfläche bei einem gleichzeitig großem Volumen auf. Somit ist das Verhältnis von Oberfläche zu Volumen des Zusatzvolumenbehälters vergleichsweise niedrig. Folglich weist der erfindungsgemäße Abrollkolben eine kompakte Bauweise bei einem gleichzeitig großen Volumen auf.

Weiterhin vorteilhaft ist der Behälterabschnitt hohlzylinderförmig ausgebildet. Die hohlzylinderförmige Ausgestaltung vergrößert nochmals das Volumen des Zusatzvolumenbehälters. Zudem kann das Deckelelement dadurch einfach an dem Behälterabschnitt befestigt werden.

In einer vorteilhaften Ausgestaltung ist zwischen dem Kolbenabschnitt und dem Behälterabschnitt ein Anschlussabschnitt angeordnet. Weiterhin vorteilhaft weist der Anschlussabschnitt eine Auflagefläche zum Befestigen des Abrollkolbens an einem Fahrzeugteil auf. Vorteilhaft ist die Auflagefläche nach außen gerichtet, so dass der Abrollkolben mittels der Auflagefläche auf einem Fahrzeugteil aufliegt. Weiterhin vorteilhaft wird zur Befestigung ein Befestigungselement, wie beispielsweise ein Befestigungsbolzen oder eine Schraube verwendet. Bevorzugt ist der Behälterabschnitt in Axialrichtung länger als der Anschlussabschnitt ausgebildet. Der verlängerte Abschnitt des Behälterabschnitts kann dabei als Anschlag zum Positionieren an einem Fahrzeugteil dienen.

Bevorzugt ist das Deckelelement über eine Kupplungseinrichtung mit dem Abrollkolben verbunden. Weiterhin bevorzugt umfasst die Kupplungseinrichtung ein Befestigungselement, das mit einem ersten Ende mit dem Abrollkolben und mit einem zweiten Ende mit dem Deckelelement verbunden ist. In einer vorteilhaften Ausgestaltung erstreckt sich das Befestigungselement durch das Deckelelement hindurch, wobei es mit seinem zweiten Ende an einer Oberfläche des Deckelelements anliegt. Hierzu kann in dem Deckelelement eine Öffnung beziehungsweise eine Bohrung eingebracht sein. Vorteilhaft ist zur Abdichtung zwischen dem Befestigungselement und der Öffnung ein Dichtelement angeordnet. Weiterhin bevorzugt ist das Befestigungselement als Sechskantsschraube ausgebildet, wobei das zweite Ende mit einem Schraubenkopf und das erste Ende mit einem Gewinde zum Einschrauben in den Abrollkolben versehen ist. In einer vorteilhaften Ausgestaltung ist zwischen dem zweiten Ende des Befestigungselementes und der Oberfläche des Deckelelements eine Unterlegscheibe angeordnet. Dadurch wird die auf das Deckelelement wirkende Kraft während des Festschraubens auf eine größere Fläche verteilt, so dass eine Beschädigung des Deckelelements vermieden wird.

In einer weiteren vorteilhaften Ausgestaltung ist das Deckelelement stoffschlüssig mit dem Behälterabschnitt verbunden, insbesondere verschweißt und/oder verklebt. Vorteilhaft ist die Schweißnaht und/oder die Klebenaht umlaufend ausgebildet. Das Verschweißen erfolgt bevorzugt mittels Heißgasschweißen. Beim Heißgasschweißen werden die beiden zu fügenden Bauteile, insbesondere deren Fügebereich, durch Heißgas erwärmt und/oder aufgeschmolzen beziehungsweise plastifiziert und anschließend unter Druck miteinander gefügt. Die Erwärmung beziehungsweise Plastifizierung erfolgt beim Heißgasschweißen kontaktlos über Heißgas. Vorteilhaft wird beim Heißgasschweißen Stickstoff als Heißgas verwendet. Hierdurch werden die Bauteile während des Erwärmens beziehungsweise Plastifizierens vor einer Oxidation und/oder Reaktion geschützt. Dadurch weist die Schweißnaht eine hohe Festigkeit auf.

Weiterhin vorteilhaft ist das Deckelement mit dem Behälterabschnitt verschraubt. Bevorzugt weist das Deckelelement einen ersten umlaufenden Gewindeabschnitt und der Behälterabschnitt einen dazu korrespondierenden zweiten umlaufenden Gewindeabschnitt auf. Das Verschrauben stellt ein einfach zu handhabendes und damit kostengünstiges Fügeverfahren dar. Ferner können die Gewinde bereits während der Herstellung des Deckelelements und des Abrollkolbens oder in einem nachgeschalteten Arbeitsgang eingebracht werden.

In vorteilhafter Ausgestaltung ist zwischen dem Deckelelement und dem Behälterabschnitt ein Dichtring angeordnet. Bevorzugt wird dann ein Dichtring verwendet, wenn das Deckelelement in den Behälterabschnitt eingeschraubt wird. Der Dichtring sorgt für eine ausreichende Abdichtung des Zusatzvolumenbehälters. Vorteilhaft ist der Dichtring als O-Ring ausgebildet. Derartige Dichtringe sind als kostengünstige Massenware erhältlich.

Weiterhin vorteilhaft weist das Deckelelement einen Flanschabschnitt auf, in den ein freies Ende des Behälterabschnitts eingreift. Vorteilhaft ist der Flanschabschnitt als umlaufender Rücksprung ausgebildet. Bevorzugt ist in den Flanschabschnitt eine umlaufende Nut eingebracht, in die ein am Behälterabschnitt abragender Vorsprung eingreift. Dadurch wird eine ausreichende Abdichtung des Zusatzvolumenbehälters im Verbindungsbereich von Deckelelement und Behälterabschnitt geschaffen.

Erfindungsgemäß ist der Kolbenabschnitt mit einer Puffer-Dämpfer-Einheit versehen. Bevorzugt weist der Kolbenabschnitt einen ringförmigen Befestigungsabschnitt auf, in den die Puffer-Dämpfer-Einheit eingebracht ist. In vorteilhafter Ausgestaltung übernimmt die Puffer-Dämpfer-Einheit die Dämpfungsfunktion. Hierzu sind in die Puffer-Dämpfer-Einheit Öffnungen eingebracht. Während einer Ein- und Ausfederung strömt das im Arbeitsraum und dem Zusatzvolumenbehälter befindliche Fluid über die Öffnungen hin und her, wobei aufgrund des Reibungseffekts eine Dämpfung erzeugt wird. Die Öffnungen können zur Einstellung einer Dämpfungscharakteristik zudem mit einem Ventil versehen sein. Bevorzugt ist die Puffer-Dämpfer-Einheit in den Befestigungsabschnitt eingepresst. Vorteilhaft ist der ringförmige Befestigungsabschnitt als Klemmsitz ausgebildet. Zur Verstärkung des Klemmsitzes können in den Befestigungsabschnitt zusätzliche Verstärkungselemente eingebracht sein.

Ferner kann die Puffer-Dämpfer-Einheit auch dazu verwendet werden, um den Klemmsitz des Abrollkolbens zu verstärken. Hierzu wird die Puffer-Dämpfer-Einheit in den Abrollkolben eingebracht, insbesondere eingepresst und anschließend wird ein freies Ende eines Luftfederbalgs mittels eines Klemmringes mit dem Abrollkolben verklemmt. Somit nimmt die Puffer-Dämpfer-Einheit beim Ein- und Ausfedern die Zug- und Druckbelastungen des Luftfederbalgs auf. Dadurch wird der Abrollkolben nur durch den im Inneren vorherrschenden Innendruck belastet. Vorteilhaft ist die Puffer-Dämpfer-Einheit als separate Einheit ausgebildet, die in einem nachgeschalteten Arbeitsgang in den Abrollkolben eingepresst wird. Darüber hinaus kann die Puffer-Dämpfer-Einheit auch stoffschlüssig beispielsweise durch Verschweißen oder Verkleben mit dem Kolbenabschnitt verbunden sein.

Weiterhin vorteilhaft weist die Puffer-Dämpfer-Einheit eine Ventilplatte und ein Pufferelement auf. Über die Ventilplatte strömt das Fluid zwischen dem Arbeitsraum und dem Abrollkolben beziehungsweise dem Zusatzvolumenbehälter hin und her. Hierzu sind vorteilhaft in die Ventilplatte Öffnungen mit einem kleinen Querschnitt eingebracht, um einen Reibungseffekt und damit einhergehend eine Dämpfungswirkung zu erzielen. Die Öffnungen können mittels Ventile freigebbar oder verschließbar sein. Vorteilhaft ist das Pufferelement derart auf der Ventilplatte angeordnet, dass es dem Arbeitsraum zugeordnet ist. Der Puffer dient als Anschlag für den Abrollkolben und begrenzt somit dessen Bewegung in Axialrichtung.

In einer vorteilhaften Ausgestaltung ist die Ventilplatte mit einem Stützrohr versehen. Vorteilhaft ist das Stützrohr auf einer dem Puffer gegenüberliegenden Seite der Ventilplatte angebracht und erstreckt sich dabei im montierten Zustand der Puffer-Dämpfer-Einheit durch den Kolbenabschnitt und den Anschlussabschnitt. Vorteilhaft stützt sich das Stützrohr auf einer der Auflagefläche gegenüberliegenden Seite des Anschlussabschnitts ab. Bevorzugt erfolgt die Befestigung des Abrollkolbens mit einem Fahrzeugteil über das Stützrohr. Hierzu kann ein Befestigungselement, wie beispielsweise ein Befestigungsbolzen oder eine Schraube mit dem Stützrohr verbunden sein. Das Stützrohr übertragt die auf den Puffer einwirkende Kraft unmittelbar auf das Fahrzeugteil. Somit dient das Stützrohr als Festigkeitsträger für die Puffer-Dämpfer-Einheit. Vorteilhaft ist das Stützrohr stoffschlüssig mit der Ventilplatte verbunden.

In einer vorteilhaften Ausgestaltung ist der Abrollkolben, vorzugsweise der Kolbenabschnitt mit einem Ringelement mit einer Abrollkontur zum Abrollen eines Luftfederbalgs versehen. Bevorzugt ist das Ringelement als separates Element ausgebildet, das kraftschlüssig mit dem Kolbenabschnitt, insbesondere dem Abrollabschnitt verbindbar ist. Beim Einfedern eines Luftfederdämpfers rollt dabei ein Luftfederbalg auf der Abrollkontur ab. Über die Formgebung der Abrollkontur kann die Steifigkeit bzw. die Kennlinie des Luftfederdämpfers eingestellt werden. Somit kann auf kostengünstige Weise die Steifigkeit bzw. die Kennlinie eines Luftfederdämpfers eingestellt werden. Vorteilhaft ist das Ringelement aus Kunststoff hergestellt. Bevorzugt ist der Kolbenabschnitt zylinderförmig ausgebildet, so dass das Ringelement einfach aufpressbar ist. Dadurch ist der Abrollkolben leicht entformbar. Weiterhin vorteilhaft stützt das Ringelement einen am Abrollkolben befestigten Klemmring ab.

Bevorzugt ist der Abrollkolben aus einem Verbundwerkstoff, insbesondere aus Polyamid (PA) mit Glasfasern oder Polypropylen (PP) mit Glasfasern hergestellt. Dadurch weist der Abrollkolben eine hohe Festigkeit und gleichzeitig ein niedriges Gewicht auf. Ferner kann der Abrollkolben mittels Spritzgießen hergestellt werden. Bevorzugt wird das Deckelelement separat hergestellt. Darüber hinaus kann der Abrollkolben auch aus Metall, insbesondere Aluminium hergestellt sein.

Ferner kann die Oberfläche des erfindungsgemäßen Abrollkolbens mit einer Verrippung versehen sein, um dessen Festigkeit gegenüber Steinschlag zu erhöhen. Zusätzlich kann die Innenfläche des Kolbenabschnitts, des Anschlussabschnitts und/oder des Behälterabschnitts sowie die Innenfläche des Deckelelements mit einer Versteifungsstruktur versehen sein. Hierzu kann die Versteifungsstruktur eine Vielzahl an Versteifungsrippen aufweisen, die an der Innenfläche der Abschnitte beziehungsweise des Deckelelements angeformt sind. In vorteilhafter Ausgestaltung sind die Versteifungsrippen als horizontale und vertikale Rippen ausgebildet, die in äquidistanten Abständen zueinander angeordnet sind.

Ferner betrifft die vorliegende Beschreibung einen Luftfederdämpfer mit einem erfindungsgemäßen Abrollkolben, einem Luftfederbalg und einem Abschlusselement. Bevorzugt ist der Luftfederbalg mit einem ersten freien Ende mit dem Abrollkolben und mit einem zweiten freien Ende mit dem Abschlusselement verbunden, um einen mit Fluid gefüllten Arbeitsraum zu bilden. Vorteilhaft ist der Luftfederbalg mittels eines Klemmringes an einer Außenfläche des Abrollkolbens und an einer Außenfläche des Abschlusselementes befestigt. Weiterhin vorteilhaft ist in den Abrollkolben eine Puffer-Dämpfer-Einheit eingebracht. Vorteilhaft verstärkt die Puffer-Dämpfer-Einheit den Klemmsitz zur Befestigung des Luftfederbalgs. Der erfindungsgemäße Luftfederdämpfer zeichnet sich durch den im Abrollkolben integrierten Zusatzvolumenbehälter aus. Insbesondere die halbkugelförmige Ausgestaltung des Deckelelementes sorgt für ein niedriges Verhältnis von Oberfläche zu Volumen. Folglich hat der Luftfederdämpfer ein ausreichend großes Volumen für die Dämpfung und ist zudem kompakt gebaut. Darüber hinaus ist der erfindungsgemäße Luftfederdämpfer aufgrund des integrierten Zusatzvolumenbehälters kostengünstig in der Herstellung und weist zudem ein geringes Gewicht auf.

Nachfolgend wird der erfindungsgemäße Abrollkolben und der Luftfederdämpfer anhand der beigefügten schematischen Zeichnungen näher erläutert. Hierbei zeigen:
- Fig. 1: eine perspektivische Darstellung eines Luftfederdämpfers mit einem erfindungsgemäßen Abrollkolben gemäß einer ersten Ausführungsform;
- Fig. 2: einen Längsschnitt durch den in Fig. 1 dargestellten Luftfederdämpfer;
- Fig. 3: eine perspektivische Darstellung des erfindungsgemäßen Abrollkolbens gemäß der ersten Ausführungsform;
- Fig. 4: einen Längsschnitt durch den in Fig. 3 dargestellten Abrollkolben
- Fig. 5: eine perspektivische Darstellung einer Puffer-Dämpfer-Einheit;
- Fig. 6: einen Längsschnitt durch die in Fig. 5 dargestellte Puffer-Dämpfer-Einheit;
- Fig. 7: einen Längsschnitt durch einen Luftfederdämpfer mit einem erfindungsgemäßen Abrollkolben gemäß einer zweiten Ausführungsform; und
- Fig. 8: eine perspektivische Darstellung eines erfindungsgemäßen Abrollkolbens gemäß einer dritten Ausführungsform.

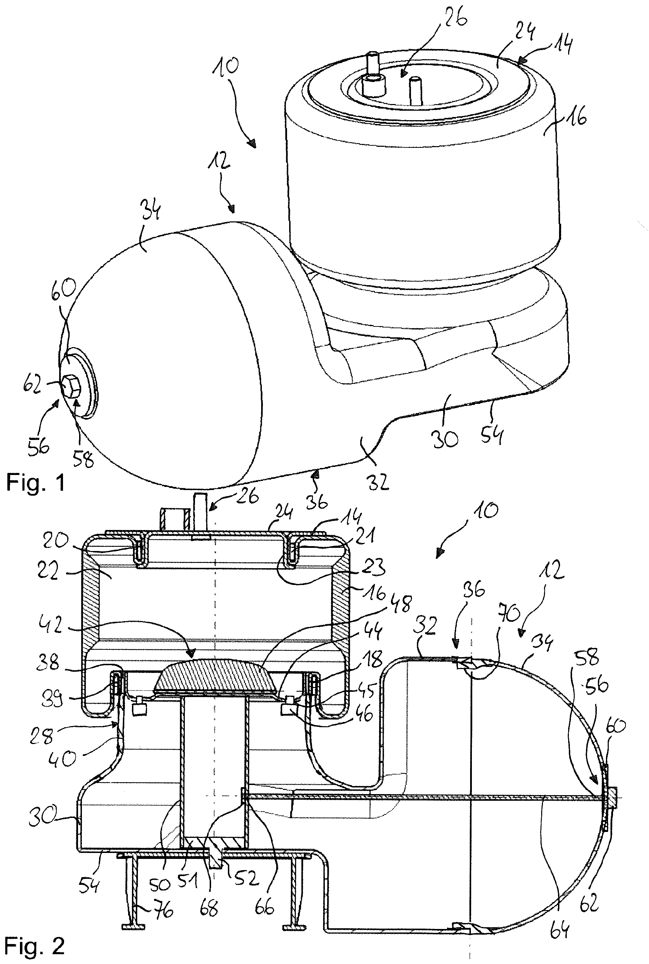

In den Fig. 1 und 2 ist ein Luftfederdämpfer 10 gezeigt, der zwischen einem nicht dargestellten tragenden Teil und einem Lenker 76 eines Nutzfahrzeugs angeordnet wird.

Der Luftfederdämpfer 10 weist einen erfindungsgemäßen Abrollkolben 12, ein Abschlusselement 14 und einen Luftfederbalg 16 auf. Der Luftfederbalg 16 ist, wie insbesondere in Fig. 2 dargestellt ist, an einem ersten freien Ende 18 mit dem Abrollkolben 12 und an einem zweiten freien Ende 20 mit dem Abschlusselement 14 verbunden, um so einen mit Fluid gefüllten Arbeitsraum 22 zu bilden.

Das Abschlusselement 14 ist vorliegend als Platte mit einem Kragenabschnitt 23 zur Befestigung des zweiten Endes 20 ausgebildet und weist einen Auflageabschnitt 24 zur Auflage eines tragenden Teils auf. Das zweite Ende 20 ist mittels eines Klemmringes 21 mit dem Kragenabschnitt 23 verklemmt. Des Weiteren ist das Abschlusselement 14 mit einer Anschlusseinrichtung 26 zum Anschließen einer nicht dargestellten Fluidquelle versehen. Über die Anschlusseinrichtung 26 kann der Druck innerhalb des Arbeitsraums 22 geändert werden. Als Fluidquelle kann dabei Druckluft verwendet werden. Hierzu kann ein nicht dargestellter Druckluftschlauch mit der Anschlusseinrichtung 26 verbunden werden.

Wie insbesondere in den Fig. 2 bis 4 ersichtlich ist, weist der Abrollkolben 12 einen hohlzylinderförmigen Kolbenabschnitt 28, einen Anschlussabschnitt 30, einen näherungsweise hohlzylinderförmig ausgebildeten Behälterabschnitt 32 und ein halbkugelförmiges Deckelelement 34 auf. Das Deckelelement 34 verschließt dabei den Behälterabschnitt 32, wobei ein Zusatzvolumenbehälter 36 mit einem Zusatzvolumen gebildet wird. Das Zusatzvolumen des Zusatzvolumenbehälters 36 ist fluidleitend mit dem Anschlussabschnitt 30 und dem Kolbenabschnitt 28 verbunden.

Der Kolbenabschnitt 28 umfasst einen ringförmigen Befestigungsabschnitt 38 und einen Abrollabschnitt 40, auf dessen Außenfläche der Luftfederbalg 16 beim Ein- und Ausfedern abrollen kann. Das zweite Ende 20 des Luftfederbalgs 16 ist mit einem Klemmring 39 auf einer Außenseite des Befestigungsabschnitts 38 verklemmt, wie in Fig. 2 ersichtlich ist. Ferner ist in den Befestigungsabschnitt 38 eine Puffer-Dämpfer-Einheit 42 eingebracht. Die Puffer-Dämpfer-Einheit 42 verstärkt den Klemmsitz zur Befestigung des Luftfederbalgs 16. Darüber hinaus nimmt die Puffer-Dämpfer-Einheit 42 beim Ein- und Ausfedern die Zug- und Druckbelastungen auf. Dadurch wird der Abrollkolben 12 nur durch den Innendruck belastet.

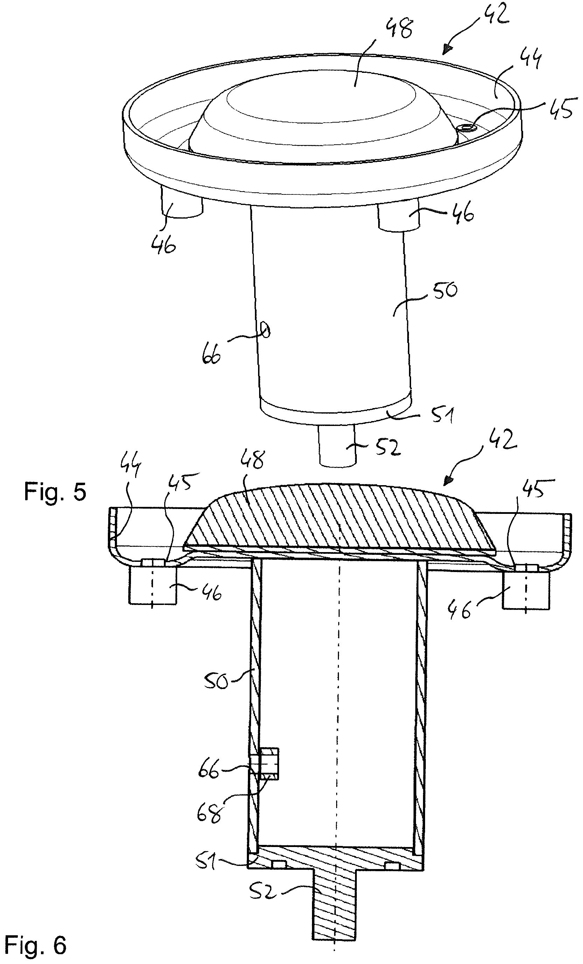

Wie in den Fig. 5 und 6 ersichtlich ist, ist die Puffer-Dämpfer-Einheit 42 als separate Einheit ausgebildet, die in den Befestigungsabschnitt 38 einbringbar, insbesondere einpressbar ist. Die Puffer-Dämpfer-Einheit 42 kann auch stoffschlüssig mit dem Befestigungsabschnitt 38 durch Verschweißen und/oder Verkleben verbunden sein. Die Puffer-Dämpfer-Einheit 42 weist eine Ventilplatte 44 mit darin eingebrachten Öffnungen 45, einen Puffer 48 und ein Stützrohr 50 auf. Die Öffnungen 45 sind mittels Ventile 46 freigebbar und verschließbar. Über die Öffnungen 45 bzw. die Ventile 46 strömt während eines Ein- und Ausfederns das in dem Arbeitsraum 22 und in dem Abrollkolben 12 beziehungsweise dem Zusatzvolumenbehälter 36 befindliche Fluid hin und her. Da die Öffnungen 45 einen vergleichsweise kleinen Querschnitt haben, tritt aufgrund des Reibungseffekts eine Dämpfung während des Ein- und Ausfederns auf. Der Puffer 48 dient als Anschlag während einer axialen Bewegung des Abrollkolbens 12 und begrenzt somit die axiale Auslenkung des Abrollkolbens 12. Das Stützrohr 50 ist fest mit der Ventilplatte 44 verbunden und erstreckt sich durch den Kolbenabschnitt 28 und den Anschlussabschnitt 30. Zudem ist das Stützrohr 50 endseitig mit einer Bodenplatte 51 versehen, mittels derer es sich auf einem Boden des Anschlussabschnitts 30 abstützt. Die Bodenplatte 51 weist einen Schraubbolzen 52 auf, über den die Befestigung des Abrollkolbens 12 an einem Lenker 76 eines Nutzfahrzeugs erfolgt, wie in Fig. 2 dargestellt ist.

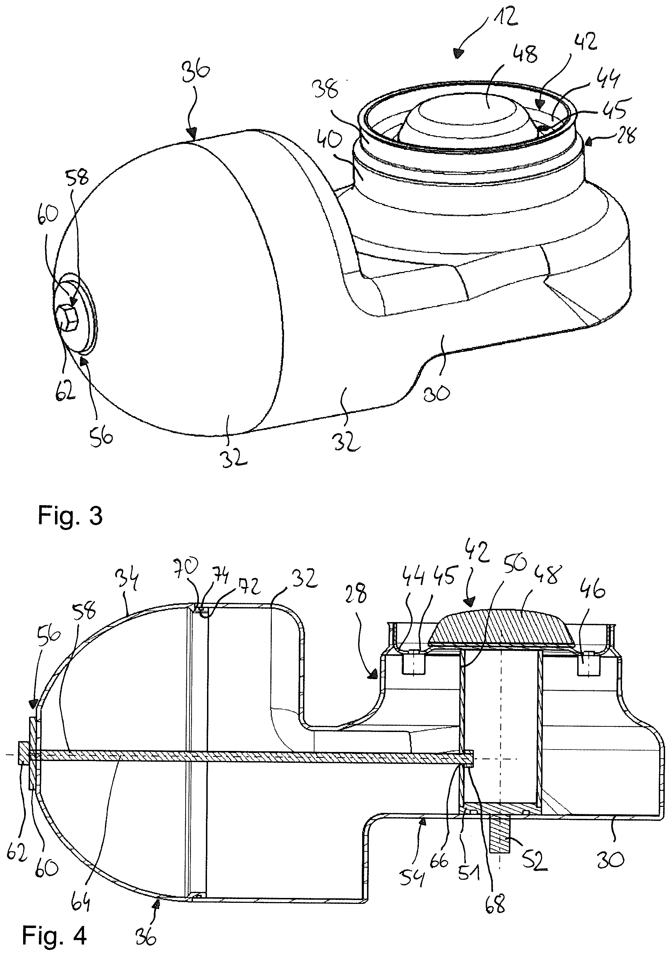

Die Befestigung des Deckelelements 34 mit dem Abrollkolben 12 erfolgt über eine Kupplungseinrichtung 56, wie in den Fig. 2 und 4 dargestellt ist. Hierzu weist die Kupplungseinrichtung 56 eine Sechskantschraube 58 und eine Unterlegscheibe 60 auf. Dabei liegt ein Schraubenkopf 62 der Sechskantschraube 58 an einer Oberfläche des Deckelelements 34 an, wobei sich ein Schraubenschaft 64 durch eine in dem Deckelelement 34 eingebrachte Öffnung hindurch erstreckt. Zwischen der Öffnung und dem Schraubenschaft 64 ist ein nicht dargestelltes Dichtelement angeordnet. Der Schraubenschaft 64 ist endseitig mit einem Gewinde versehen, das sich durch eine in dem Stützrohr 50 eingebrachte Bohrung 66 hindurch erstreckt. Die Bohrung 66 ist von einer Mutter 68 umgeben, die fest mit dem Stützrohr 50 verbunden ist. Zur Befestigung der Sechskantsschraube 58 wird das Gewinde des Schraubenschaftes 64 in die Mutter 68 eingeschraubt. Die Unterlegscheibe 60 ist zwischen dem Deckelelement 34 und dem Schraubenkopf 62 angeordnet. Um eine ausreichende Auflagefläche für die Unterlegscheibe 60 zu schaffen, ist das Deckelelement 34 im Bereich der Öffnung abgeflacht ausgebildet. Ferner weist das Deckelelement 34 einen umlaufenden Flanschabschnitt 70 auf, der vorliegend als Rücksprung ausgebildet ist. Das freie Ende des Behälterabschnitts 32 liegt dabei in dem Flanschabschnitt 68 ein. Um eine ausreichende Gasdichtheit zu schaffen, weist der Flanschabschnitt 70 eine umlaufende Nut 72 auf, in die ein am freien Ende des Behälterabschnitts 32 umlaufend ausgebildeter Vorsprung 74 eingreift.

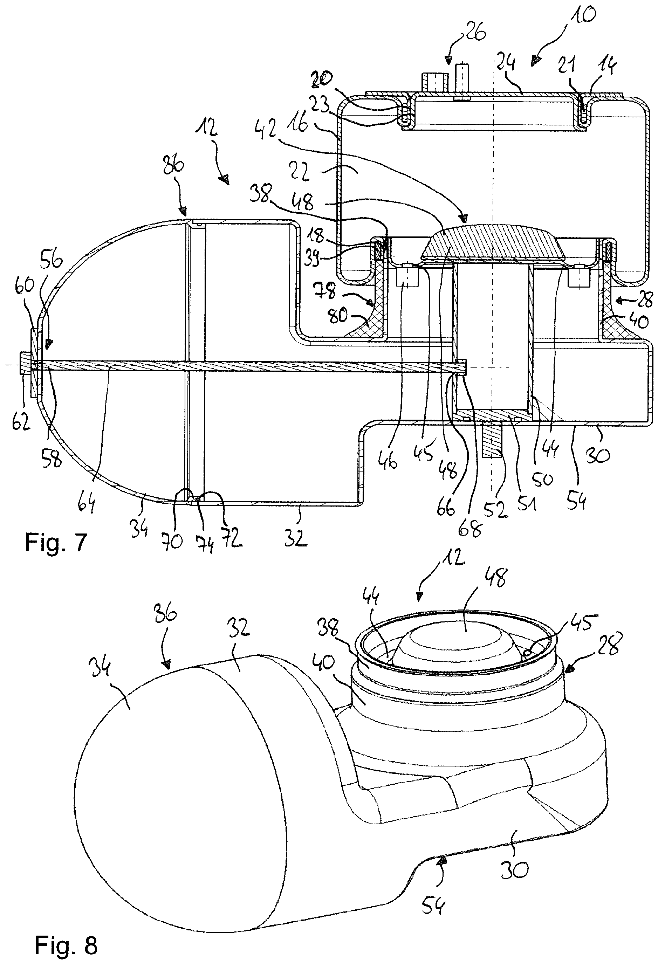

Fig. 7 zeigt eine zweite Ausführungsform eines erfindungsgemäßen Abrollkolbens 12, die sich von der ersten Ausführungsform dadurch unterscheidet, dass der Kolbenabschnitt 28, insbesondere der Abrollabschnitt 40 mit einem Ringelement 78 mit einer Abrollkontur 80 versehen ist. Das Ringelement 78 ist dabei ein separates aus Kunststoff hergestelltes Element, das kraftschlüssig mit dem Kolbenabschnitt 40, insbesondere dem Abrollabschnitt 40 verbunden ist. Bevorzugt ist das Ringelement 78 auf den Kolbenabschnitt 28, insbesondere den Abrollabschnitt 40 aufgepresst. Beim Einfedern des Luftfederdämpfers 10 rollt der Luftfederbalg 16 auf dem Radius der Abrollkontur 80 ab. Über die Formgebung der Abrollkontur 80 kann die Steifigkeit bzw. die Kennlinie des Luftfederdämpfers 10 eingestellt werden. Somit kann auf kostengünstige Weise die Steifigkeit bzw. die Kennlinie des Luftfederdämpfers 10 eingestellt werden. Ferner dient das Ringelement 78 zur axialen Fixierung des Klemmringes 39.

In Fig. 8 ist eine dritte Ausführungsform eines erfindungsgemäßen Abrollkolbens 12 dargestellt, die sich von der ersten und zweiten Ausführungsform dadurch unterscheidet, dass das Deckelelement 34 mit dem Behälterabschnitt 32 stoffschlüssig, insbesondere mit einer umlaufenden Schweiß- und/oder Klebenaht verbunden ist.

In einer weiteren alternativen Ausführungsform kann das Deckelelement 34 mit dem Behälterabschnitt 32 über eine Schraubverbindung verbunden sein. Hierzu weist das Deckelelement 34 einen ersten Gewindeabschnitt und der Behälterabschnitt 32 einen dazu korrespondierenden zweiten Gewindeabschnitt auf, in den der erste Gewindeabschnitt einschraubbar ist. Zur Abdichtung ist zwischen dem Deckelelement 34 und dem Behälterabschnitt 32 ein Dichtring angeordnet.

Der erfindungsgemäße Abrollkolben 12 ist aus einem Verbundwerkstoff, insbesondere aus Polyamid (PA) mit Glasfasern oder Polypropylen (PP) mit Glasfasern im Spritzgussverfahren hergestellt. Ferner ist es auch denkbar, den Abrollkolben 12 aus Metall herzustellen.

Der Luftfederdämpfer 10 zeichnet sich durch den erfindungsgemäßen Abrollkolben 12 aus, der ein integriertes Zusatzvolumen in Form eines Zusatzvolumenbehälters 36 aufweist. Aufgrund des halbkugelförmigen Deckelelementes 34 ist das Verhältnis von Oberfläche zu Volumen des Zusatzvolumenbehälters 36 vergleichsweise niedrig. Dadurch weist der Abrollkolben 12 ein ausreichend großes Volumen zur Dämpfung sowie eine kompakte Bauweise auf.

### Bezugszeichenliste

- 10: Luftfederdämpfer
- 12: Abrollkolben
- 14: Abschlusselement
- 16: Luftfederbalg
- 18: erstes freies Ende
- 20: zweites freies Ende
- 21: Klemmring
- 22: Arbeitsraum
- 23: Kragenabschnitt
- 24: Auflageabschnitt
- 26: Anschlusseinrichtung
- 28: Kolbenabschnitt
- 30: Anschlussabschnitt
- 32: Behälterabschnitt
- 34: Deckelelement
- 36: Zusatzvolumenbehälter
- 38: Befestigungsabschnitt
- 39: Klemmring
- 40: Abrollabschnitt
- 42: Puffer-Dämpfer-Einheit
- 44: Ventilplatte
- 45: Öffnung
- 46: Ventil
- 48: Puffer
- 50: Stützrohr
- 51: Bodenplatte
- 52: Schraubbolzen
- 54: Auflagefläche
- 56: Kupplungseinrichtung
- 58: Sechskantschraube
- 60: Unterlegscheibe
- 62: Schraubenkopf
- 64: Schraubenschaft
- 66: Bohrung
- 68: Mutter
- 70: Flanschabschnitt
- 72: Nut
- 74: Vorsprung
- 76: Lenker
- 78: Ringelement
- 80: Abrollkontur

## Patentansprüche

1. Abrollkolben (12) für einen Luftfederdämpfer (10) im Nutzfahrzeugbereich, mit einem Kolbenabschnitt (28) und einem Behälterabschnitt (32), die hohl ausgebildet und fluidleitend miteinander verbunden sind, sowie einem Deckelelement (34), wobei das Deckelelement (34) mit dem Behälterabschnitt (32) verbunden ist, um einen Zusatzvolumenbehälter (36) mit einem Zusatzvolumen zu bilden, wobei das Deckelelement (34) den Behälterabschnitt (32) verschließt,
wobei der Kolbenabschnitt (28) und der Behälterabschnitt (32) getrennt voneinander hergestellt und anschließend gasdicht miteinander verbunden sind,
**dadurch gekennzeichnet, dass** der Kolbenabschnitt (28) mit einer Puffer-Dämpfer-Einheit (42) versehen ist.

2. Abrollkolben nach Anspruch 1, **dadurch gekennzeichnet, dass** das Deckelelement (34) halbkugelförmig ausgebildet ist.

3. Abrollkolben nach Anspruch 1 oder 2, **dadurch gekennzeichnet, dass** der Behälterabschnitt (32) hohlzylinderförmig ausgebildet ist.

4. Abrollkolben nach einem der Ansprüche 1 bis 3, **dadurch gekennzeichnet, dass** zwischen dem Kolbenabschnitt (28) und dem Behälterabschnitt (32) ein Anschlussabschnitt (30) angeordnet ist.

5. Abrollkolben nach einem der Ansprüche 1 bis 4, **dadurch gekennzeichnet, dass** das Deckelelement (34) über eine Kupplungseinrichtung (56) mit dem Abrollkolben (12) verbunden ist.

6. Abrollkolben nach Anspruch 5, **dadurch gekennzeichnet, dass** die Kupplungseinrichtung (56) ein Befestigungselement (58) umfasst, das mit einem ersten Ende mit dem Abrollkolben (12) und mit einem zweiten Ende mit dem Deckelelement (34) verbunden ist.

7. Abrollkolben nach einem der Ansprüche 1 bis 4, **dadurch gekennzeichnet, dass** das Deckelement (34) stoffschlüssig mit dem Behälterabschnitt (32) verbunden, insbesondere verschweißt und/oder verklebt ist.

8. Abrollkolben nach einem der Ansprüche 1 bis 4, **dadurch gekennzeichnet, dass** das Deckelelement (34) mit dem Behälterabschnitt (32) verschraubt ist.

9. Abrollkolben nach einem der Ansprüche 1 bis 8, **dadurch gekennzeichnet, dass** zwischen dem Deckelelement (34) und dem Behälterabschnitt (32) ein Dichtring angeordnet ist.

10. Abrollkolben nach einem der vorhergehenden Ansprüche, **dadurch gekennzeichnet, dass** die Puffer-Dämpfer-Einheit (42) eine Ventilplatte (44) und ein Pufferelement (48) aufweist.

11. Abrollkolben nach Anspruch 10, **dadurch gekennzeichnet, dass** die Ventilplatte (44) mit einem Stützrohr (50) versehen ist.

12. Abrollkolben nach einem der Ansprüche 1 bis 11, **dadurch gekennzeichnet, dass** der Abrollkolben (10), vorzugsweise der Kolbenabschnitt (28) mit einem Ringelement (78) mit einer Abrollkontur (80) zum Abrollen eines Luftfederbalgs (16) versehen ist.

13. Abrollkolben nach einem der Ansprüche 1 bis 12, **dadurch gekennzeichnet, dass** der Abrollkolben (12) aus einem Verbundwerkstoff, vorzugsweise aus Polyamid mit Glasfasern oder Polypropylen mit Glasfasern hergestellt ist.

14. Abrollkolben nach einem der Ansprüche 4 bis 13,
**dadurch gekennzeichnet, dass** der Anschlussabschnitt (30) eine Auflagefläche (54) zum Befestigen des Abrollkolbens (12) an einem Fahrzeugteil (76) aufweist.

## Claims

1. A rolling piston (12) for an air spring damper (10) in the field of commercial vehicles, a rolling piston having a piston section (28) and a container section (32) which are of hollow configuration and are connected to one another in a fluid-conducting manner, and a cover element (34), the cover element (34) being connected to the container section (32), in order to form an additional volume container (36) having an additional volume, the cover element (34) closing the container section (32), the piston section (28) and the container section (32) being produced separately from one another and being subsequently connected to one another in a gas-tight manner,
**characterized in that** the piston section (28) is provided with a buffer/damper unit (42).

2. The rolling piston as claimed in claim 1, **characterized in that** the cover element (34) is of hemispherical configuration.

3. The rolling piston as claimed in claim 1 or 2, **characterized in that** the container section (32) is of hollow-cylindrical configuration.

4. The rolling piston as claimed in one of claims 1 to 3, **characterized in that** a connector section (30) is arranged between the piston section (28) and the container section (32).

5. The rolling piston as claimed in one of claims 1 to 4, **characterized in that** the cover element (34) is connected to the rolling piston (12) via a coupling device (56).

6. The rolling piston as claimed in claim 5, **characterized in that** the coupling device (56) comprises a fastening element (58) which is connected by way of a first end to the rolling piston (12) and by way of a second end to the cover element (34).

7. The rolling piston as claimed in one of claims 1 to 4, **characterized in that** the cover element (34) is connected in an integrally joined manner to the container section (32), in particular is welded and/or adhesively bonded.

8. The rolling piston as claimed in one of claims 1 to 4, **characterized in that** the cover element (34) is screwed to the container section (32).

9. The rolling piston as claimed in one of claims 1 to 8, **characterized in that** a sealing ring is arranged between the cover element (34) and the container section (32).

10. The rolling piston as claimed in one of the preceding claims, **characterized in that** the buffer/damper unit (42) has a valve plate (44) and a buffer element (48).

11. The rolling piston as claimed in claim 10, **characterized in that** the valve plate (44) is provided with a support tube (50).

12. The rolling piston as claimed in one of claims 1 to 11, **characterized in that** the rolling piston (12), preferably the piston section (28) with a ring element (78), is provided with a rolling contour (80) for rolling an air spring bellows (16).

13. The rolling piston as claimed in one of claims 1 to 12, **characterized in that** the rolling piston (12) is produced from a composite material, preferably from polyamide with glass fibers or polypropylene with glass fibers.

14. The rolling piston as claimed in one of claims 4 to 13, **characterized in that** the connector section (30) has a supporting face (54) for fastening the rolling piston (12) to a vehicle part (76).

## Revendications

1. Piston à déroulement (12) pour un amortisseur à ressort pneumatique (10) dans le domaine des véhicules utilitaires, comprenant une portion de piston (28) et une portion de récipient (32) qui sont réalisées creuses et reliées entre elles en communication fluidique, ainsi qu'un élément de couvercle (34), l'élément de couvercle (34) étant relié à la portion de récipient (32) pour former un récipient de volume supplémentaire (36) avec un volume supplémentaire, l'élément de couvercle (34) refermant la portion de récipient (32),
dans lequel
la portion de piston (28) et la portion de récipient (32) sont fabriquées séparément l'une de l'autre et sont ensuite reliées l'une à l'autre de manière étanche aux gaz,
**caractérisé en ce que**
la portion de piston (28) est munie d'une unité amortisseur-tampon (42).

2. Piston à déroulement selon la revendication 1,
**caractérisé en ce que**
l'élément de couvercle (34) est réalisé sous forme hémisphérique.

3. Piston à déroulement selon la revendication 1 ou 2,
**caractérisé en ce que**
la portion de récipient (32) est réalisée sous forme de cylindre creux.

4. Piston à déroulement selon l'une des revendications 1 à 3,
**caractérisé en ce que**
une portion de raccordement (30) est disposée entre la portion de piston (28) et la portion de récipient (32).

5. Piston à déroulement selon l'une des revendications 1 à 4,
**caractérisé en ce que**
l'élément de couvercle (34) est relié au piston à déroulement (12) par l'intermédiaire d'un dispositif d'accouplement (56).

6. Piston à déroulement selon la revendication 5,
**caractérisé en ce que**
le dispositif d'accouplement (56) comprend un élément de fixation (58) qui est relié par une première extrémité au piston à déroulement (12) et par une seconde extrémité à l'élément de couvercle (34).

7. Piston à déroulement selon l'une des revendications 1 à 4,
**caractérisé en ce que**
l'élément de couvercle (34) est relié par coopération de matière à la portion de récipient (32), en particulier par soudage et/ou par collage.

8. Piston à déroulement selon l'une des revendications 1 à 4,
**caractérisé en ce que**
l'élément de couvercle (34) est relié par vissage à la portion de récipient (32).

9. Piston à déroulement selon l'une des revendications 1 à 8,
**caractérisé en ce que**
un anneau d'étanchéité est disposé entre l'élément de couvercle (34) et la portion de récipient (32).

10. Piston à déroulement selon l'une des revendications précédentes,
**caractérisé en ce que**
l'unité amortisseur-tampon (42) comprend une plaque de vanne (44) et un élément tampon (48).

11. Piston à déroulement selon la revendication 10,
**caractérisé en ce que**
la plaque de vanne (44) est munie d'un tube de soutien (50).

12. Piston à déroulement selon l'une des revendications 1 à 11,
**caractérisé en ce que**
le piston à déroulement (12), de préférence la portion de piston (28), est pourvu(e) d'un élément annulaire (78) présentant un contour de déroulement (80) pour faire dérouler un soufflet de ressort pneumatique (16).

13. Piston à déroulement selon l'une des revendications 1 à 12,
**caractérisé en ce que**
le piston à déroulement (12) est réalisé en un matériau composite, de préférence en polyamide à fibres de verre ou en polypropylène à fibres de verre.

14. Piston à déroulement selon l'une des revendications 4 à 13,
**caractérisé en ce que**
la portion de raccordement (30) présente une surface d'appui (54) pour fixer le piston à déroulement (12) à une partie de véhicule (76).
